# EUROPEAN PATENT APPLICATION

(11) **EP 3 388 992 A1**
(43) Date of publication of application: **17.10.2018**
(21) Application number: 17000632.4
(22) Date of filing: 12.04.2017
(51) Int. Cl.: G06Q 20/04, G06Q 20/32

(54) **SYSTEM FOR AUTOMATED FARE COLLECTION AND PAYMENT VALIDATION, PARTICULARLY FOR PUBLIC TRANSIT APPLICATIONS**

(71) Applicant: Trapeze Switzerland GmbH, 8212 Neuhausen am Rheinfal (CH); Trapeze Germany GmbH, 13629 Berlin (DE)
(72) Inventor: Müller, Dominique, 8447 Dachsen (CH); Retka, Manfred, 13437 Berlin (DE); Kley, Jonas, 8400 Winterthur (CH)
(74) Representative: Roos, Peter

(57) **Abstract**

A system for automated fare collection on a transit vehicle including a transit vehicle computer system, a wireless communications unit configured to send and receive ticketing transaction data from the transit vehicle computer system to a backend server, comprising one or more detector units, such as a Bluetooth Low Energy (BLE) beacons, configured to detect the presence of one or more rider user media, such as a mobile device, to provide communications between the rider user medium and a detector unit or transit vehicle computer system. The rider user medium provides one or more of ticketing services and transit information services to the rider via communication with the backend server via the detector unit.

## Description

### FIELD OF THE INVENTION

The invention relates to public transit ticketing systems, and more particularly to a system for automated fare collection and payment validation in public transit applications.

### BACKGROUND

Transit agencies have recently begun to implement automated fare collection solutions, whereby riders have mobile devices or other electronically readable user media. These are either capable of being preloaded with sufficient funds for a transit trip, and subsequently debited an amount for the trip without the involvement of an operator aboard the transit vehicle, and in some instances without the involvement of an operator at a transit station either. Alternatively, the user may be billed in a post-payment fashion according the transit trips undertaken in the transportation system, applying a tariff system to the transit trips recorded automatically.

Some prior art solutions have attempted to use wireless mobile communications (WiFi) over cellular networks, however, having each individual rider trigger a connection with a wireless network for each transaction can be cumbersome and slow. Other prior art solutions have maintained a constant connection, but riders then make payment via NFC, Bluetooth, Bluetooth Low Energy (BLE) or other protocols.

While these solutions are sometimes effective for communicating with a rider's smartphone, validating payment by paper can be problematic, such as for the purposes of individual inspections aboard the transit vehicle. A similar problem exists for systems using proximity-type smartcards. In these examples, a paper ticket may be an actual physical paper ticket, a proximity-type smartcard or a representation of a ticket on a mobile device, such as a bar code or other scannable indicia which would be displayed on a screen of a mobile device representing a paper ticket.

There is a need in the art for an improved ticket validation system, particularly for public transit applications, allowing for rapid ticket validation of a large number of riders while accessing a transit system or on board a transit vehicle.

### SUMMARY OF THE INVENTION

In one embodiment of the invention, there is provided a system for automated fare collection on a transit vehicle including a transit vehicle computer system, a wireless communications unit configured to send and receive ticketing transaction data from the transit vehicle computer system to a backend server, and at least one detector unit, such as a Bluetooth Low Energy (BLE) beacon, configured to detect the presence of a user medium, such as a rider mobile device, to provide communications between the rider user medium and at least one validator unit and/or the transit vehicle computer system. The rider user medium provides one or more of ticketing services and transit information services to the rider via communication with the transit vehicle computer system and/or the backend server via the detector unit. In an aspect of this embodiment of the invention, the system further includes at least one validator unit in data communication with said transit vehicle computer system. Preferably, such a system is designed as stated in claim 1.

In one aspect of the invention, the detector unit detects the presence of the user medium by detecting advertisements emitted periodically by an application executed on the rider user medium.

In another aspect of the invention, the application executed on the rider user medium responds to the transit vehicle computer system by detecting advertisements emitted periodically by the detector unit and/or the validator.

In another aspect of the invention, the detector unit receives transit-related information from the transit vehicle computer system.

In another aspect of the invention, transit vehicle computer system obtains or acquires location-related information, such as for example GPS coordinates.

In another aspect of the invention, the application executed on the rider user medium facilitates ticket purchasing and validation.

In another aspect of the invention, the application executed on the rider user medium facilitates ticket inspection.

In another aspect of the invention, the validator unit is a paper ticket validator unit including a means for printing tickets or ticket purchase confirmations; the validator unit further including a computer processor for validating tickets via a ticket scanning means.

In another aspect of the invention, the tickets validated via a ticket scanning means are either paper tickets or representations of paper tickets displayed on a screen of the rider user medium.

In another aspect of the invention, the validator receives transit-related information from the transit vehicle computer system.

In another aspect of the invention, the transit-related information includes one or more of information related to a transit route, run time, location, direction, tariff and ticket cost parameters.

In another aspect of the invention, the validator forms part of an integrated onboard information system.

In another aspect of the invention, the detector unit forms part of an integrated onboard information system.

In another aspect of the invention, the validator facilitates ticket purchase transactions by the rider user medium.

In another aspect of the invention, the at least one validator unit comprises a plurality of detector units positioned throughout the transit vehicle.

In another embodiment of the invention, there is provided a method for automated fare collection on a transit vehicle including providing a transit vehicle computer system, sending and receiving ticketing transaction data from said transit vehicle computer system to a backend server, detecting with a detector unit, such as with a Bluetooth Low Energy (BLE) unit, the presence of a rider user medium, such as a rider mobile device, and providing communications between the user medium and at least one validator unit and/or the transit vehicle computer system. The rider user medium provides one or more of ticketing services and transit information services to the rider via communication with the transit vehicle computer system and/or backend server via the detector unit. In an aspect of this embodiment of the invention, the method further includes providing at least one validator unit in data communication with said transit vehicle computer system. Preferably, such a method is designed as stated in claim 9.

### BRIEF DESCRIPTION OF THE DRAWINGS

Embodiments of the invention are illustrated in the figures of the accompanying drawings which are meant to be exemplary and not limiting, in which like references are intended to refer to like or corresponding parts, and in which:
FIG. 1 is schematic view showing communication between a mobile device and a transit vehicle computer system.
FIG. 2 is a schematic view of one embodiment of the system according to the invention.
FIG. 3 is a schematic view of a backend system in communication with the system of FIG. 2
FIG. 4 shows an exemplary account data model used in the systems of FIGs. 2 and 3.
FIG. 5 shows an exemplary operational data model used by rider user media, such as rider mobile devices, in the systems of FIGs. 2 and 3.
FIG. 6 shows an exemplary operational data model used by the transit vehicle computer system.
FIG. 7 shows an exemplary vehicle log data model.
FIG. 8 shows an exemplary validator data model.

### DETAILED DESCRIPTION OF THE INVENTION

The various embodiments of the invention aim to implement a contactless ticket validation, such as a Bluetooth Low Energy (BLE) detector unit, acting as a remote validator for a user medium (such as a smartphone or otherwise scannable or electronically identifiable) based ticketing solutions. These implementations of Bluetooth Low Energy (BLE) based automated fare collection solutions which use mobile devices as the user media is an upcoming trend in public transit systems, however, data communication is usually routed from the user medium directly to the background system utilizing public wireless communication systems, such as public land mobile network (PLMN). This design bears weaknesses such as impeded operation in areas with poor or no reception of public wireless communication systems, as for example present in an underground metro system, in remote areas or locations with a large number of people imposing overload to the communication system.

The implementation of an automated fare collection system is in many ways beneficial, including reducing the cost of installation, operation and/or maintenance when compared to conventional ticketing systems.

The implementation of detector unit into a ticket validator is advantageous in a number of ways, including having a lower installation cost and lead time for rolling out such an automated fare collection system.

Another optional object of the invention is to provide functionality in the absence of paper ticketing altogether. In this case, the detector unit or validator unit is provisioned to provide processing and communications abilities for validating user media, such as a Bluetooth Low Energy (BLE) capable device, itself.

Another optional object is to provide a detector unit or validator as herein described in combination with or extension to a credit card based ticketing solution, such that the validator functions as a payment/detection unit.

Another optional object is to combine and/or extend the user media with other ticketing, identification, admission and/or payment solutions, such as Europay MasterCard Visa (EMV), ISO 14443 or ISO 15693.

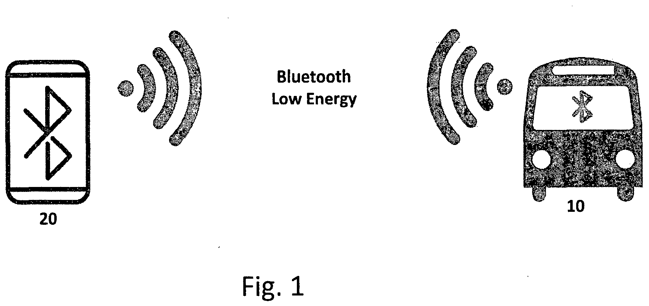

Turning to Fig. 1, there is shown a schematic arrangement in which a transit vehicle 10 and a user medium 20 of each rider of the transit vehicle are in active communication with each other via a wireless data connection, such as a Bluetooth and/or Bluetooth Low Energy (BLE) connection. The transit vehicle 10 may pass a number of different types of information to each user, preferably to a dedicated application on the user medium, such as vehicle information, route information, advertisements, estimated trip time, location information such as GPS, tariff information, ticketing cost, etc. The user medium 20 provides the transit operator with information about the rider as contained within the application on the user medium and/or as retrievable from the background system based on the identification of the user medium.

Bluetooth and/or Bluetooth Low Energy (BLE) technology is preferably used in the invention, rather than WiFi as in other implementations. First, at low data rates in which the described system would typically be operating, Bluetooth Low Energy (BLE) has a significantly lower energy consumption than WiFi. In addition, the possibilities to control WiFi modules on current incarnations of user medium, such as smartphones with iOS and Android operating systems, is limited.

Bluetooth Low Energy (BLE) provides for two types of devices in communication with each other, a Central Device and a Peripheral Device. The Peripheral Device periodically sends a beacon signals, which are intercepted by the Central Device. These roles allow a connection to be established between the Central and Peripheral Devices and simultaneously coordinated sleep/wake cycles to control power consumption. The permanent scanning for beacons generates a higher power consumption in the Central Device. In Fig. 1, the transit vehicle 10 contains hardware elements making it the Central Device, whereas the individual rider user medium form a plurality of Peripheral Devices. At the same time, the transit vehicle 10 and the user medium 20 are able to swap roles, allowing the transit vehicle 10 to operate as peripheral and the user medium 20 as central device.

Current Bluetooth Low Energy (BLE) technology does not permit simultaneous connection to an unlimited number of Peripheral Devices or even a sufficient number that would cover all riders in a transit vehicle. Accordingly, the wake and sleep cycles are important for conserving power and a sophisticated connection scheduling scheme establishes cyclic connections to different user media on the vehicle to reach out to all riders within a predefined period of time, as for example between two stops on a short ride.

Bluetooth Low Energy (BLE) connections may be established with or without pairing. The advantage of pairing is that it allows to establish a secure communication channel and allows for more data to be exchanged between the Central and Peripheral devices.

The mobile devices preferably are Bluetooth and Bluetooth Low Energy (BLE) compatible to function with the present invention. These include, but are not limited to, iOS devices from iPhone 4s and iOS 7 onwards, as well as various Android devices.

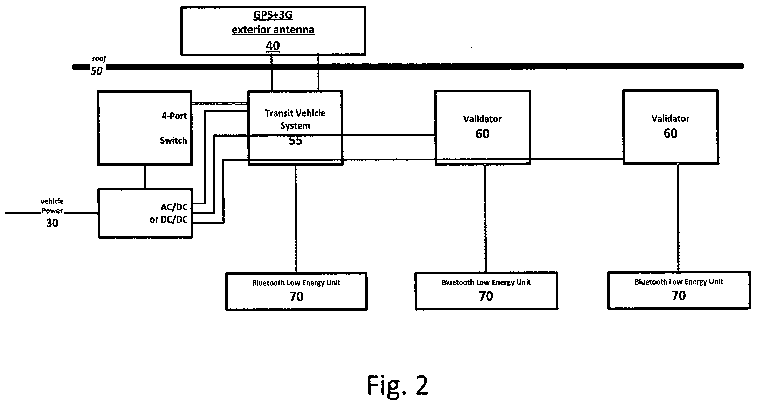

Turning now to Fig. 2, there is shown a general arrangement of the hardware used by an embodiment of the invention. A roof 50 of a transit vehicle 10 (e.g. the vehicle 10 of Fig. 1) is shown, atop of which is a means for providing wireless data communication with the transit vehicle 10 from a transit authority back end (described later), or other data communication service, exemplified as a GPS and PLMN (Public Land Mobile Network), one example of which is a 3G exterior antenna 40, although various other antennae or wireless communications units are also contemplated. The elements shown below the roof are illustrated schematically and may be located at any location within the transit vehicle 10.

The antenna or other network communication unit 40 can be used for all necessary data communication or exchange between the transit vehicle 10 and the operator servers, but for the particular purposes of the present, the communication unit 40 sends and receives data relevant to the validator or detector unit to the operator server (not shown in this figure) relevant for ticketing transactions. In addition, software updates and other material could also be communicated. In preferred implementations, the communication unit 40 could be a public mobile radio communication unit (such as the illustrated 3G or 4G antenna), particularly when the transit vehicle operates with an Integrated Onboard Information System (IBIS). In the case where the transit vehicle operates on an IBIS IP protocol, the IP routing functions will be available in the vehicle itself and provided by an onboard processor and router which acts as the communications unit. In this instance, the communications unit will likely be interior to the transit vehicle itself. It is also noted that the IBIS IP arrangement would be similar to an implementation where the invention is used at a transit station rather than onboard a vehicle, for example.

Within the vehicle, transit vehicle system 55 preferably includes a computer processor and detector unit 70 acting as the central Bluetooth Low Energy (BLE) unit and in direct communication with the communication unit 40. One or more validator units 60 may be dispersed throughout the transit vehicle and in communication with the transit vehicle system 55. The validator units 60 may be simple ticket validator units or may also include scanning abilities to read tickets on smartphones or other user media which otherwise do not have Bluetooth and/or Bluetooth Low Energy (BLE) capabilities. The validator units 60 may include printing mechanics and electronics for validating paper tickets, and are in communication with the transit vehicle system 55 for data collection purposes. In addition, each of the validator units 60 may include their own Bluetooth Low Energy (BLE) units 70 to provide communications from the validator 60 to the processor of the transit vehicle system 55. This permits each of the validator units to act as a beacon for detecting the presence of a mobile device about the vehicle based on mobile device Bluetooth Low Energy (BLE) advertisements.

The transit vehicle system 55 and its Bluetooth Low Energy (BLE) unit 70 generally act as a processing and communications unit, including an internal Bluetooth Low Energy (BLE) antenna, providing Bluetooth-based ticketing to riders of the vehicle. This is done via Bluetooth and/or Bluetooth Low Energy (BLE) communications with riders having user media, such as smartphones. The user media of the riders on the transit vehicle will have an application installed thereon to communicate with the transit vehicle system 55 through Bluetooth and/or Bluetooth Low Energy (BLE). The application may allow riders to purchase tickets, have a previously purchase ticket validated and otherwise access transit-related information. Furthermore, service requests, advertisements, information and other messages may be exchanged between the transit vehicle and the riders via the application.

A standard validator multipoint connector supplies power and data communication capabilities for all internal devices. These may conform, for example, to Series 3 of DIN 41622.

The aforementioned and described hardware elements are used to provide a hybrid paper ticket validator system with a Bluetooth ticketing and validation system. In practice, a user will indicate a desire to purchase a ride fare within the application on the user media, such as an app on the smart phone or a button on a dongle or smartcard, or otherwise have pre-purchased the fare, which is then validated aboard the transit vehicle, and optionally a paper ticket is printed at the validator when the mobile device is in close proximity and the user requests a paper ticket. Various implementation details and surrounding hardware and software architecture will now be described.

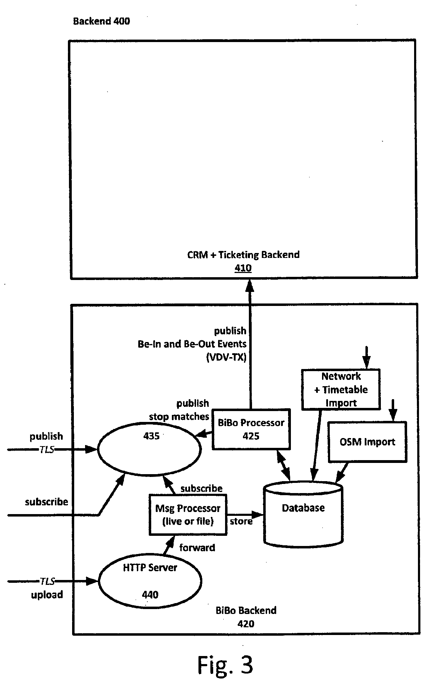

Fig. 3 shows the integration of the above-described validator beacon and associated components into a larger system, including a backend server.

The backend consists generally of a customer relationship management system 410, which may include a key management system for cryptographically securing transactions involved and a ticketing backend for the purchase and organization of the purchase of tickets. The system 410 is generally known in the art and not particularly altered for the purposes of the present invention.

In communication with the customer relationship managements system 410 is Be In - Be Out (BiBo) or Check In - Be Out (CiBo) backend system 420 operating on a computer system. The backend system 420 is in communication with a CiBo or BiBo 310 main unit located on the transit vehicle itself. The backend system 420 include a computer system having a processor 425 and computer readable storage 430. A machine-machine protocol module 435 provides a basis for data and communication transfer between the transit vehicle system 55 (of Fig. 2) and the backend system 420. Wireless communication between the transit vehicle and the backend system is facilitated by an HTTP server 440, which forwards received files to the storage 430, and any messages requiring pass thru to the CRM to the processor via the protocol module 435. Other elements may also access the storage 430, as illustrated. The processor 420 corresponds with the CRM and ticketing backend 410 to confirm, record and otherwise document passenger in and out events, passenger information, and other information relevant to confirming accurate passenger information and ticketing.

Ultimately, the backend 410 is responsible for the import of raw data, including but not limited to transit stops, GPS coordinates, OSM data, fleet data, timetable information and processing of this data for location and positioning purposes - and with specific regards to the invention, for determining trip lengths and distances travelled per passenger. All location and detection events (ie. detecting a rider boarding and departing the vehicle) are stored and processed by the backend. This information is then transferred or otherwise communicated to the CRM and ticketing backend to handle payment processing or account debiting.

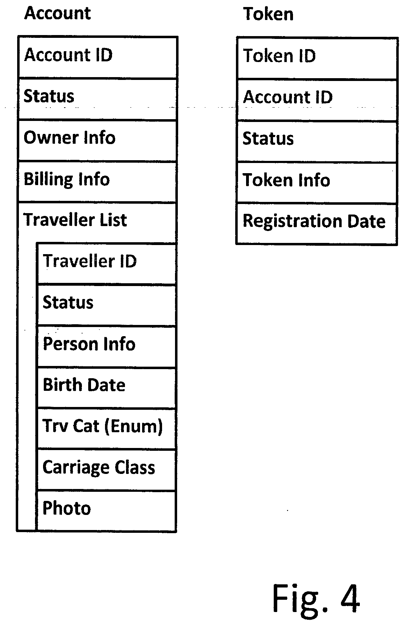

Various data models may be used to facilitate communication between the various backend elements, the onboard transit system and the individual smartphones. Fig. 4 shows an exemplary account data model. Each data packet includes an Account ID, Status, Owner data and Billing Data. Each account permits up to 8 travelers to be associated with that account, and stores information such as a Traveler ID, Status, Person Information, Birth Date, Traveler Category, Carriage Class and a Photo. Each mobile phone (ie. token) includes identification information such as a Token ID, Account ID, Status, Token Info and Registration Date. This data permits the system as a whole to track and direct information related to specific accounts, passengers and mobile devices.

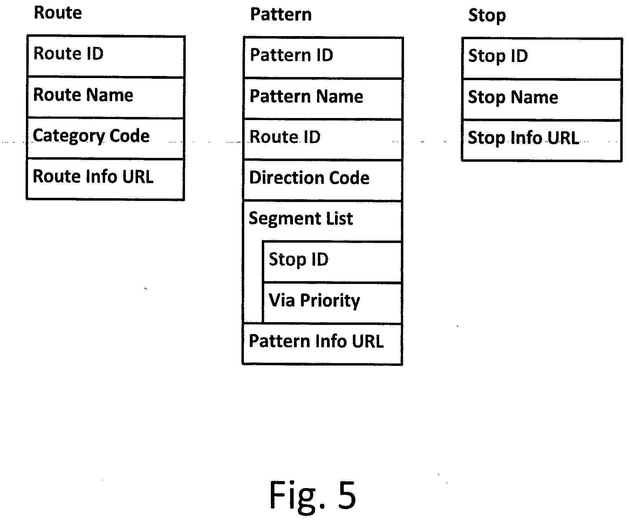

Fig. 5 shows a representation of operational data model used by the mobile device installed app to provide the rider with relevant information regarding the trip. The rider will thus have information on his/her mobile device related to the transit route they are on, the route pattern and an upcoming stop along the route. Route information is provided in the form of a Route ID, Route Name, Route Category Code and a URL link to information about the route, such as from the transit operator's website. The route pattern includes data such as a Pattern ID, Pattern Name, the Route ID, a Direction Code, Segment Lists including Stop IDs for each stop and Priority information. A URL link to pattern information is also provided. Finally, along the route, stop information is provided in the form of Stop IDs, Stop Names and a URL link to information about the stop.

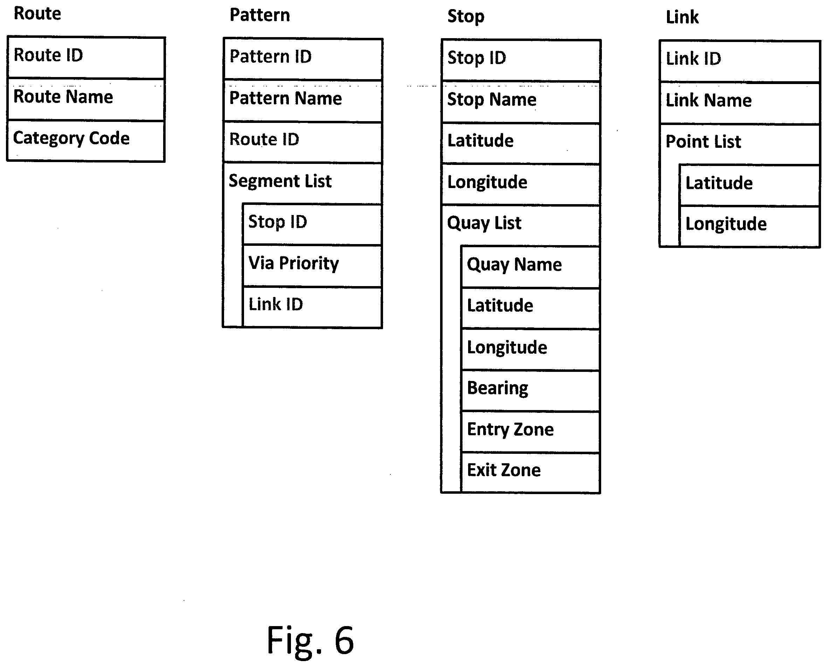

Fig. 6 shows the counter to Fig. 5 and includes the operational data model of the onboard transit system including the validator of the invention. The data model in this case includes Route, Pattern, Stop and Link data. Link data refers to connection points to other routes. The Route data includes a Route ID, Route Name and Route Category Code. The route pattern includes data such as a Pattern ID, Pattern Name, the Route ID, a Direction Code, and Segment Lists including Stop IDs for each stop and Priority information, and Link information for connections to other transit vehicles. The Stop data includes a Stop ID, Stop Name, Location Data and a Quay List including Quay Name, Quay location, Quay Bearing, and Entry and Exit Zones. Finally, the Link data includes a Link ID, Link Name and Link positional information.

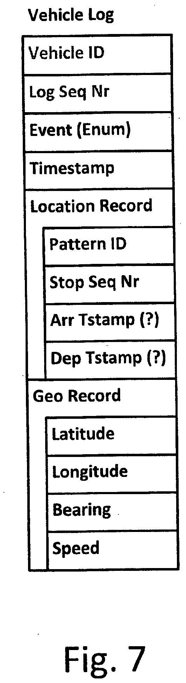

Fig. 7 shows an exemplary vehicle log, recorded and stored on the transit system of each vehicle. Since the individual validators do not maintain their own logs, the vehicle log collects a trace of the vehicle through the transit network. The log file is closed and uploaded to the backend whenever a new trip is started or a logoff event occurs. In addition, the events are also optionally streamed to the backend as they occur to allow real-time processing of data at the backend. The vehicle log includes a Vehicle ID, an Event, Timestamp, Location Record Data including Pattern ID, Stop Number, Arrival Timestamp and Departure Timestamp, and Geo Record data including Latitude, Longitude, Bearing and Speed.

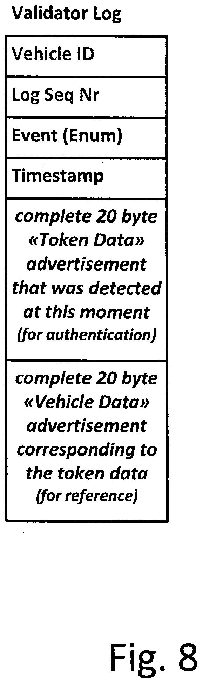

A validator log is shown in Fig. 8, which is stored on the transit vehicle system for each validator. The log file is closed and uploaded whenever either a new trip is started or a logoff event occurs, either immediately or when the Internet connection is established next time. The validator log maintains a Vehicle ID, Event Identifier, Timestamp and complete 20 byte Token Data for authentication and 20 byte Vehicle Data for reference. The Token Data for authentication is accepted whenever a mobile device advertisement is detected aboard the vehicle.

In addition, a token log is maintained by the mobile device to provide a second source confirmation that the trip happened. The token log is similar to the validator log, but stores a Token ID in place of the Vehicle ID.

The uploaded data includes all log entries collected before and during the trip, with the trip start event being the first entry. The token log is closed an uploaded whenever an explicit checkout of the vehicle occurs or an implicit (ie. otherwise detected) event occurs, provided an Internet connection is available. The uploaded data includes all log entries collected before and during the trip, with the checkout even being the last entry. These events may also be streamed on an individual basis to the backend to allow real-time access to current data by the backend.

The events that trigger a token log to be uploaded may be a user or device started or stopped the app, user enabled or disabled BT (on device level), user enabled or disabled Internet connection, app noticed availability or loss of Internet connection, app downloaded key material, app downloaded operational data, app uploaded log data, user changed traveler data (traveler ID, additional travelers, carriage class, ...), user enabled or disabled the app (from within the app), user checked into new vehicle, user explicitly checked out from vehicle, user defined new «to» stop while checked in, app detected implicit be-out from vehicle, app detected visited new stop while checked in

The mobile device time is not used for logging. For events that are related to an interaction with the backend, the timestamp shall be provided by the backend and logged when the transaction is completed. While checked in, the timestamp shall correspond to the latest received detector timestamp. All other events shall use the latest valid timestamp obtained from either backend or detector.

The following user actions void a prior check in: disable Bluetooth communication, disable and/or closing the application, explicit or implicit checkout, and expiry of key material or operational data. Upon implicit checkout or expiry of key material or operational data, the user is alerted that a checkout occurred.

A rider having a mobile device with the application installed may log in to the app before or during boarding a transit vehicle. As the passenger approaches a vehicle with the detectors and validators described above, the app receives the advertisements sent by the detectors. The rider may now check in either generally for using the described transit system or specifically on a vehicle of said transit system, for example a vehicle in close proximity.

Once checked into the vehicle, the passenger may retrieve information about the current trip via the app, including expected arrival time at stops until the end of the trip and possible transfers to other routes. The passenger may be able to place service requests to the vehicle. The app may also determine and display the journey itself on a map, for example. Real-time information, including expected arrival and departure times from various stops, is based on an existing Internet-based dynamic timetable that is otherwise known in the art.

The rider with the app installed would then also be required to present the mobile device for inspection, either via scanning a QR code or by proximity detection using Bluetooth Low Energy (BLE) or other near field communication technology described above.

Upon inspection, the inspector may trigger on his inspection device a so called 'raid mode'. When enabled, the inspector device communicates to the transit vehicle computer system to inhibit the check-in of additional riders. Hereby, the check-in states of all user media aboard the transit vehicle are preserved and allow the inspector to capture fraudulent riders.

The invention herein described may be implemented in a number of different systems and using configurations other than those herein described. Some of these systems are exemplified in European Patent Nos. EP1210693, EP1362330, EP1619602, the contents of which are herein incorporated by reference.

It will be apparent to one of skill in the art that other configurations, hardware etc. may be used in any of the foregoing embodiments of the products, methods, and systems of this invention. It will be understood that the specification is illustrative of the present invention and that other embodiments within the spirit and scope of the invention will suggest themselves to those skilled in the art. All references cited herein are incorporated by reference.

## Claims

1. A system for automated fare collection on a transit vehicle (10) comprising:
a transit vehicle computer system (55);
a wireless communications unit (40) configured to send and receive ticketing transaction data from the transit vehicle computer system (55) to a backend server (400);
at least one validator unit (60) in data communication with said transit vehicle computer system (55);
a detector unit (70) configured to detect the presence of a rider user medium (20) to provide communications between the rider user medium (20) and said at least one validator unit (60) or said transit vehicle computer system (55);
wherein said rider user medium (20) provides one or more of ticketing services and transit information services to the rider via communication with said backend server (400) via said detector unit (70).

2. The system according to claim 1, wherein said detector unit (70) detects the presence of said rider user medium (20) by detecting advertisements emitted periodically by an application executed on said rider user medium (20), and wherein said detector unit (70) is preferably a Bluetooth Low Energy (BLE) detector unit.

3. The system according to claim 2, wherein said application executed on said rider user medium (20) facilitates ticket purchasing and validation.

4. The system of any of claims 1 to 3, wherein said validator unit (60) is a paper ticket validator unit including a means for printing ticket purchase confirmations; said validator unit (60) further including a computer processor for validating tickets via a ticket scanning means.

5. The system of claim 4, wherein said tickets validated via a ticket scanning means are either paper tickets or representations of paper tickets displayed on a screen of the rider user medium (20).

6. The system of any of claims 1 to 5, wherein said validator unit (60) receives transit-related information from said transit vehicle computer system (55); and wherein said transit-related information preferably includes one or more of information related to a transit route, run time, location, direction, tariff and ticket cost parameters.

7. The system of any of claims 1 to 6, wherein said validator unit (60) forms part of an integrated onboard information system; and said validator unit (60) facilitates ticket purchase transactions by the rider user medium (20).

8. The system of any of claims 1 to 7, wherein said at least one validator unit (60) comprises a plurality of validator units (60) positioned throughout the transit vehicle (10).

9. A method for automated fare collection on a transit vehicle (10) comprising:
providing a transit vehicle computer system (55);
sending and receiving ticketing transaction data from said transit vehicle computer system (55) to a backend server (400);
providing at least one validator unit (60) in data communication with said transit vehicle computer system (55);
detecting with a detector unit (70) the presence of a rider user medium (20);
providing communications between the rider user medium (20) and said at least one validator unit (60) or said transit vehicle computer system (55);
wherein said rider user medium (20) provides one or more of ticketing services and transit information services to the rider via communication with said backend server (400) via said detector unit (70).

10. The method according to claim 9, wherein said detector unit (70) detects the presence of said rider user medium (20) by detecting advertisements emitted periodically by an application executed on said rider user medium (20); and wherein said detector unit (70) is preferably a Bluetooth Low Energy (BLE) detector unit.

11. The method according to claim 10, wherein said application executed on said rider user medium (20) facilitates ticket purchasing and validation.

12. The method of any of claims 9 to 11, wherein said validator unit (60) is a paper ticket validator unit including a means for printing ticket purchase confirmations; said validator unit (60) further including a computer processor for validating tickets via a ticket scanning means.

13. The method of claim 12, wherein said tickets validated via a ticket scanning means are either paper tickets or representations of paper tickets displayed on a screen of the rideruser medium (20).

14. The method of any of claims 9 to 13, wherein said validator unit (60) receives transit-related information from said transit vehicle computer system (55); and wherein said transit-related information preferably includes one or more of information related to a transit route, run time, location, direction tariff, and ticket cost parameters.

15. The method of any of claims 9 to 14, wherein said at least one validator unit (60) comprises a plurality of validator units (60) positioned throughout the transit vehicle (10).
